# EUROPEAN PATENT SPECIFICATION

(11) **EP 2 537 409 B1**
(45) Date of publication and mention of the grant of the patent: **06.08.2014**
(21) Application number: 12172797.8
(22) Date of filing: 20.06.2012
(51) Int. Cl.: A01F 25/22

(54) **Storage building for agricultural products, side wall module of such storage building, and use of such storage building**
Lagerhaus für Landwirtschaftsprodukte, Seitenwand des Lagerhauses und Verwendung des Lagerhauses
Bâtiment destiné au stockage de produits agricoles, paroi latérale de ce bâtiment de stockage et utilisation d'un tel bâtiment de stockage

(30) Priority: 21.06.2011 NL 2006973
(43) Date of publication of application: 26.12.2012
(73) Proprietor: Van Meir Techniek B.V., 4651 VW Steenbergen (NL)
(72) Inventor: Van Meir, Leon Augustinus Gabriel, 4641 JH Ossendrecht (NL)
(74) Representative: Roelands, Olaf

(56) References cited:
- BE-A- 500 809
- FR-A1- 2 302 023

## Description

The present invention relates to a storage building for agricultural products, comprising two mutually opposite side walls, a front and rear wall and a roof.

A storage building for agricultural products is generally referred to in the field as a silo - particularly when the upright walls form a cylinder. The agricultural products which are stored comprise grain-like products such as cereal grains or larger products such as potatoes or onions. The most important function of the storage building is to enable dry storage of harvested product and to provide the option of drying product if necessary. The drying is for instance necessary when the product is of hygroscopic nature or when the bulk product still comprises adhering water. For the purpose of drying stored product use is made in the field of a vertical airflow which is guided through the bulk of stored product. The American patent document US 2010/0250017 thus shows a silo (see figure 2 of this document), the content of which is ventilated by introducing an airflow from below which is discharged on the upper side. Such a throughflow of air is common practice in the field, and this embodiment is in fact the standard. The advantage of the vertical airflow is that it has been found very effective in realizing a good drying at any height of the stored bulk agricultural product.

A drawback of this method of drying is that the underside of the storage building has to be provided with a ventilation provision, this usually being embodied as an air grating in combination with a fan generating the airflow. Such an air grating imposes specific requirements for the embodiment of the bottom surface of the storage building. When the storage building is erected on a site, this requires extensive preparation for the purpose of providing a ventilation provision which generates an airflow from below. The ventilation provision must for instance be provided in the ground of the site, or the storage building itself must be provided with a specific base structure into which the ventilation provision is integrated.

As an alternative, a horizontal direction of ventilation in a storage building is described in the prior art documents FR 2302023 and BE 500809.

FR 2302023 discloses a dual silo design wherein a horizontal airflow is accomplished inside each silo from a respective parallel conduit, up to a height which is determined by the height of a plunger present in the conduit.

BE 500809 discloses a drying room wherein a horizontal airflow is accomplished by fans provided in opposite site walls of the drying room.

Both disclosures relate to a storage building which is permanently fixed on the ground.

The present invention has for its object to provide a storage building which wholly or partially obviates the above stated drawbacks and provides further additional advantages in different variants thereof. The whole has for its object to provide the user with more flexibility in respect of the location where a storage building is desired.

The above stated object is achieved in a first aspect of the invention by a storage building for agricultural products comprising two mutually opposite side walls, a front and rear wall and a roof, wherein each of the two side walls comprises a ventilation channel in which a fan is arranged, wherein the ventilation channel debouches into the internal space of the storage building such that the fans are able to generate an airflow in the internal space of the storage building, wherein the main direction of the airflow between the two side walls is horizontal,
characterized in that each of the two side walls is provided with a movable arm which is connected hingedly to the side wall by means of a hinge connection such that the arm is movable between a rest position against the side wall and an active position in which the arm stands away from the side wall and protrudes into the internal space of the storage building.

The arm takes for instance a rod-like form and is connected fixedly to the side wall with a usual hinge connection. When the rod-like arm is set in the active position while the storage building is filled with agricultural product, the arm will be surrounded with agricultural product when the storage building is completely filled. There will at the same time be some free space around the arm which is not completely filled with product; this space will be considerable especially on the underside of the arm.

The arm thus creates some space inside the bulk agricultural product along which the airflow generated by the fans in the storage building can flow relatively unhindered. The arm thus forms as it were an air shaft in the bulk agricultural product which supports and guides the airflow in the storage building. Tests have shown that this effect as air shaft is a significant factor for ensuring a substantially horizontal airflow through the bulk agricultural product. This achieves that the bottom layer of the bulk agricultural product is also properly dried in the storage building.

The effect of the arm as air shaft can optionally be further enhanced by providing the arm with a suitable profile, for instance a U-shaped profile, the open side of which is directed downward, or by embodying the arm as a pipe with an open outer end and with perforations on the underside. If desired, perforations are also provided on the upper side.

The arm can be connected hingedly to the side wall at any suitable position, preferably a position where the air displacement of the fan is high or even at maximum, so that the supporting effect of the arm is optimal.

In active position the arm is advantageously directed toward the opposite side wall. The airflow is thus oriented as well as possible and the main direction of the airflow supported as well as possible. With particular preference the arm is directed horizontally, the direction optionally varying here 10 degrees therefrom.

The arm as described above is embodied for manual or motorized movement.

It has been found in practice that, when the storage building is filled with agricultural product, it is thus possible to generate an airflow which is effective in drying the bulk agricultural product such that the degree of drying is comparable to that of a vertical air throughflow when an equivalent ventilation capacity is applied. The drying effect is moreover found in the case of a horizontal airflow to be distributed more uniformly over the whole bulk.

The substantially horizontal airflow is effected in the storage building according to the invention in that the fan of one side wall blows air away from this one side wall, while the fan of the other, opposite side wall draws in air to this other side wall.

It is noted by the way that the main direction of the airflow is understood to mean that the airflow in the storage building between the two side walls is effectively horizontal, i.e. the air is displaced in the storage building substantially from the one side wall to the other side wall. The airflow can be deflected here to some extent locally in the storage space by turbulence or obstacles, without this changing the main direction.

The construction of the walls and the roof of the storage building is based on a steel frame covered with metal or plastic sheeting. When metal is used for the sheet material, it is then advantageous to provide the sheet material with a layer of polyurethane, which functions as a thermal insulator.

The fans of the storage building according to the invention are preferably two-way fans. A two-way fan has the option of reversing the blowing direction and the suction direction of the fan. It is thus possible to reverse the main direction of the airflow between the two side walls in the storage building when this is desired. This effectively achieves a further improved drying effect.

It is particularly recommended to apply an axial fan in the invention. Compared to a radial fan, such a fan achieves a greater air displacement at a given capacity.

If desired, a heating unit is incorporated in the storage building for the purpose of heating the airflow and further improving the drying.

The ventilation channel preferably debouches into the lower part of the internal space. The effectiveness of the airflow close to the ground is thus increased.

The storage building according to the invention more preferably comprises at least two air connection channels to the outside air which are preferably provided with a controllable valve for opening and closing the air connection channel. One channel is used here for inlet of outside air which is guided into the storage building and another channel functions as an outlet to the outside air for air which has been guided through the storage building.

It is specially recommended in practice that an air connection channel be arranged, together with the controllable valve, in each of the two mutually opposite side walls. The inlet and outlet for air are thus provided in the vicinity of the fan, this enhancing the simplicity of the design and the effectiveness thereof.

With particular preference the side wall of the storage building according to the invention comprises an outer wall and an inner wall, wherein the inner wall is provided with an air-permeable material and wherein the ventilation channel debouches into the air-permeable material. The air-permeable material can for instance be a wire mesh of metal or plastic. The function of the inner wall is to shield the fan on the inside of the storage building and at the same time provide sufficient airflow. The outer wall preferably forms a closed upper surface and shields the building from outside weather influences.

If desired, the ventilation channel comprises a separating wall dividing the space between the inner wall and outer wall into two compartments. Provided here in the separating wall is a passage in which the fan is accommodated.

According to a particular aspect of the invention, the walls and the roof of the storage building are embodied as respective modules which are connected releasably to each other. Such a modular construction allows the storage building to be disassembled at any moment and re-erected at a later time, at a different location if desired. Because the storage building has a ventilation system based on a horizontal air displacement, the storage building can in principle be placed at any desired location without the terrain having to be modified, while this is indeed required for a storage building with the usual ventilation system with vertical airflow. The modules for the side wall, front and rear wall and the roof can moreover be dimensioned such that they can be moved easily as freight, particularly by road transport.

In the storage building of the invention the side wall modules preferably have a height of about 3.5 metres or less, and the side wall modules can preferably be extended in telescopic manner to a height of about 4.2 metres or more.

The side wall modules are embodied in practice with a width of about 6 metres. In order to be suitable for road transport the modules must be no greater than 3.5 metres in at least one dimension direction. The height of the side wall module is therefore preferably no greater than about 3.5 metres.

At the same time an optimal height of the side wall of the storage building is roughly 4.2 metres or more. Agricultural product can in practice be poured into a storage building up to a height of about 4.0 metres without adverse effects occurring due to the pressure exerted by the heaped agricultural product on the bottom layer of product. It is therefore attractive to give the side wall module a form extendable in the height. Any extendable construction is suitable for this purpose, such as profiles sliding along each other, telescopic constructions, etc. The sliding profiles are for instance embodied as tubes which are displaced relative to each other by means of a gear rack.

The dimensioning of the modules for the roof and front and rear walls are less critical, as long as they are no greater than 3.5 metres in at least one dimension direction. The roof of the storage building must usually have a span of about 5 to 10 metres.

It is particularly advantageous in the storage building according to the invention to also provide a suspending connection between the arm and the side wall, wherein the suspending connection is fixedly connected at a first end to the arm at some distance from the hinge connection and fixedly connected at a second end to the side wall at some height above the hinge connection. The suspending connection is for instance embodied as a chain or cable of a material suitable for withstanding high pulling forces.

The suspending connection is of a length such that in the active position the suspending connection is at maximum length and forms a linear connection so that the active position is secured by the suspending connection. During pouring of agricultural product the arm is thus prevented from being placed in a position other than the intended active position.

In addition to securing the active position, the suspending connection has an additional advantage: after pouring of agricultural product the bulk exerts a force on the arm which is transmitted by the suspending connection to the side wall. The suspending connection thus exerts an inward pulling force on the side wall, this enhancing the stability of the storage building as a whole for the following reason.

During filling of the storage building the weight of the bulk agricultural product will exert an increasing force on the side walls in outward direction. The inward pulling force simultaneously exerted by the suspending connection is thus a counterforce to the outward force on the side wall. The side walls are thus prevented from bending or tilting and the integrity of the construction as a whole is guaranteed.

In order to optimize the inward tensile force of the suspending connection, the suspending connection is connected to the arm and the side wall such that in the active position of the arm the linear suspending connection forms an angle with the side wall in the range of 30-60 degrees, preferably in the range of 40-50 degrees. Similar preferred ranges apply for the angle between the linear suspending connection and the arm.

In a second aspect the invention relates to a side wall module for a storage building for agricultural products according to the invention, wherein the side wall module comprises: an outer wall and an inner wall and a ventilation channel in which a fan is arranged, and wherein the inner wall is provided with an air-permeable material and wherein the ventilation channel debouches into the inner wall of the side wall module.

The air-permeable material can for instance be a metal or plastic wire mesh. The function of the inner wall is to shield the fan on the inside of the storage building and to simultaneously provide sufficient air throughflow. The outer wall preferably forms a closed surface and shields the building from outside weather influences. The side wall module is thus suitable for constructing a storage building with the advantages of the invention.

The side wall module according to the invention preferably comprises the same measures as already specifically discussed above in respect of the side wall of the storage building (i.e. the side wall as a whole). The same considerations and advantages as already described above moreover apply for the side wall module. The corresponding measures recommended for the side wall module thus comprise, among others, the type of fan, the air connection channel (optionally with valve), the construction extendable in the height, the movable arm and the suspending connection of the arm.

Finally, the invention relates according to a third aspect to a use of a storage building according to the invention, wherein the storage building is filled with agricultural products and wherein an airflow is generated in the internal space of the storage building with the fans such that the main direction of the airflow through the agricultural products in the storage building is horizontal. Such an airflow has been found effective in practice in sufficiently drying and keeping agricultural products dry, while no provisions necessary to create a vertical airflow need be made.

If in use of the storage building according to the invention specific use is made of a storage building in which the side wall is provided with a movable arm, the arm is advantageously set in the active position during filling of the storage building with agricultural products.

The invention will now be further elucidated with reference to the accompanying drawings and a description thereof, wherein:
Figure 1 is a perspective view of a storage building according to the invention;
Figure 2 is a schematic cross-section of the storage building as shown in figure 1, with an indication of the preferred dimensions;
Figures 3 and 4 show two methods of ventilation in a cross-section of the storage building of figure 2.

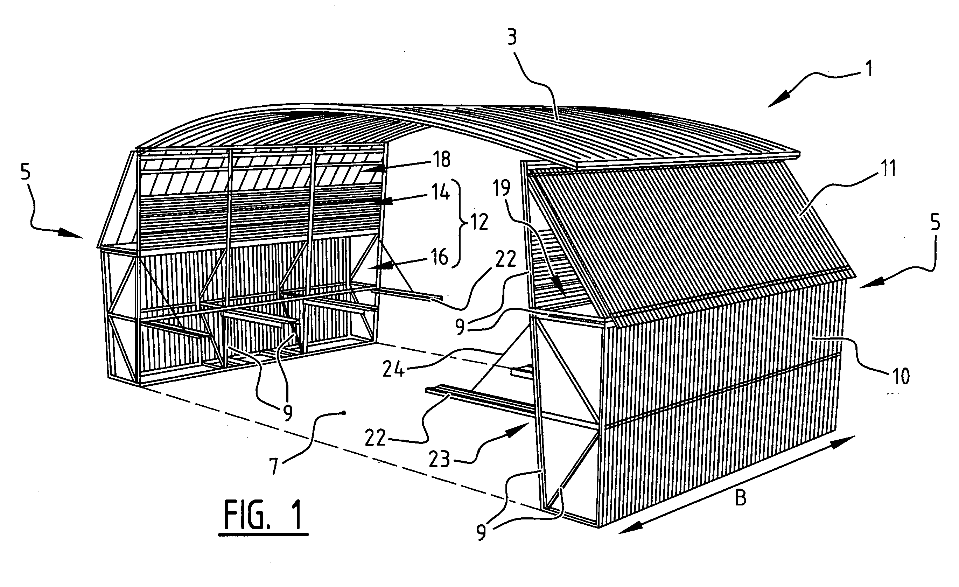

Figure 1 shows a storage building 1 with a roof 3 resting on two mutually opposite side wall modules 5 which are placed on a site 7. In order to show the internal space of the storage building the front and rear wall of the storage building are not shown. If desired, storage building 1 can be increased in size in simple manner by placing a like construction in connecting manner against the shown construction so that the storage building becomes twice as deep. The width B of the side wall module is about 6 metres. The overall depth of the storage building can thus be a multiple hereof, depending on the number of side wall modules used per side wall.

Side wall module 5 is based on a cage construction 9 which is constructed from a rod assembly. Arranged on the outer side of cage construction 9 is a fixed outer wall 10 and a movable outer wall 11, both of which are made of sheet steel. Arranged on the inner side of the cage construction are an inner wall 12 assembled from an air-permeable wire mesh 16 and a closed sheet material 14 which extend over the width of the module. Upper part 18 of cage construction 9 is not provided with an inner wall and is thus open. Alternatively, upper part 18 can be provided with a movable, closed inner wall so that this upper part 18 can be opened or be closed as desired.

Arranged in cage construction 9 and between inner wall 12 and outer wall 10 is a flat separating floor 19 which divides the interior of the cage construction into two separate spaces: an upper compartment and a lower compartment. The upper compartment is bounded on the inner side by sheet material 14 and upper part 18. The lower compartment is bounded on the inner side by the air-permeable wire mesh 16. Provided in separating floor 19 is a passage in which an axial fan is arranged. The passage functions here as an air channel between the upper and lower compartments. The direction of operation of the fan lies transversely of the surface of the separating floor and can be directed downward or upward. A separating floor 19 with fan is provided in the same way in the opposite cage construction 9.

Arms 22 are further connected to the inner side of the cage construction by means of a hinge connection. A chain which holds the arm in the shown active position is moreover provided as suspending connection 24. The hinge connection allows arms 22 to be folded upward against cage construction 9.

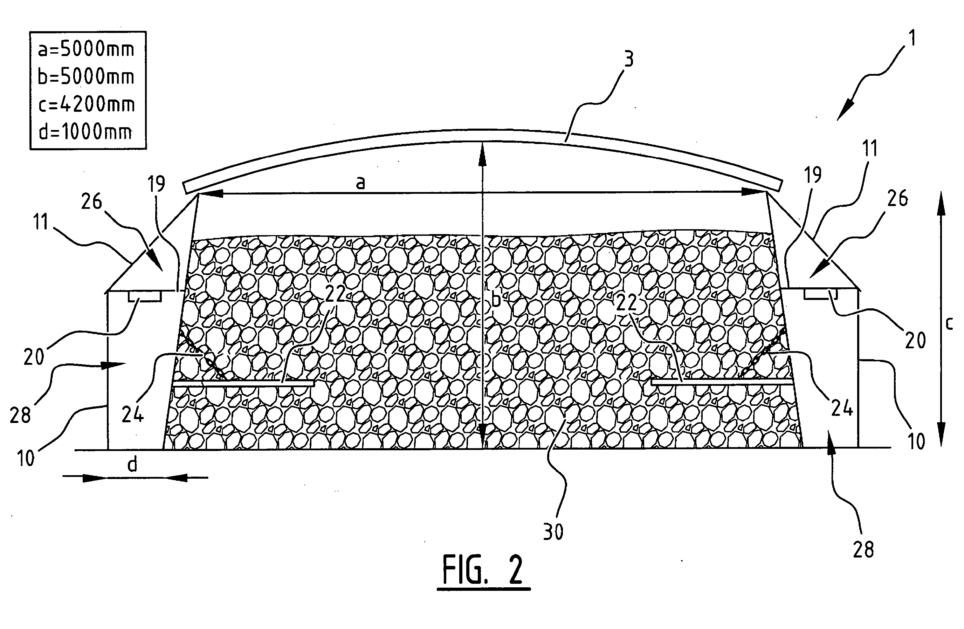

Figure 2 is a schematic cross-section of the storage building shown in figure 1. The components described in figure 1 are shown with the same numbering in figure 2. In figure 2 the storage building is filled with a bulk agricultural product 30. Separating floor 19 is further provided with a passage 20 in which an axial fan is placed. The direction of operation of the fan itself lies transversely of the separating floor and is thus in line with passage 20. Depending on the rotation direction of the fan, air is pumped from upper compartment 26 to lower compartment 28, or vice versa. The whole interior of the side wall consisting of the two compartments and the passage thus forms a ventilation channel in the side wall according to the invention.

The following preferred dimensions of the building are shown as key in figure 2:

The width of the storage building at the position of the roof (a) of 5 metres; the maximum height of the storage building (b) of 5 metres; the height of the cage construction of the side wall module (c) of 4.2 metres; the depth of the cage construction of the side wall module on the ground (d) of 1 metre. In the figure the height of the bulk agricultural product is about 4 metres.

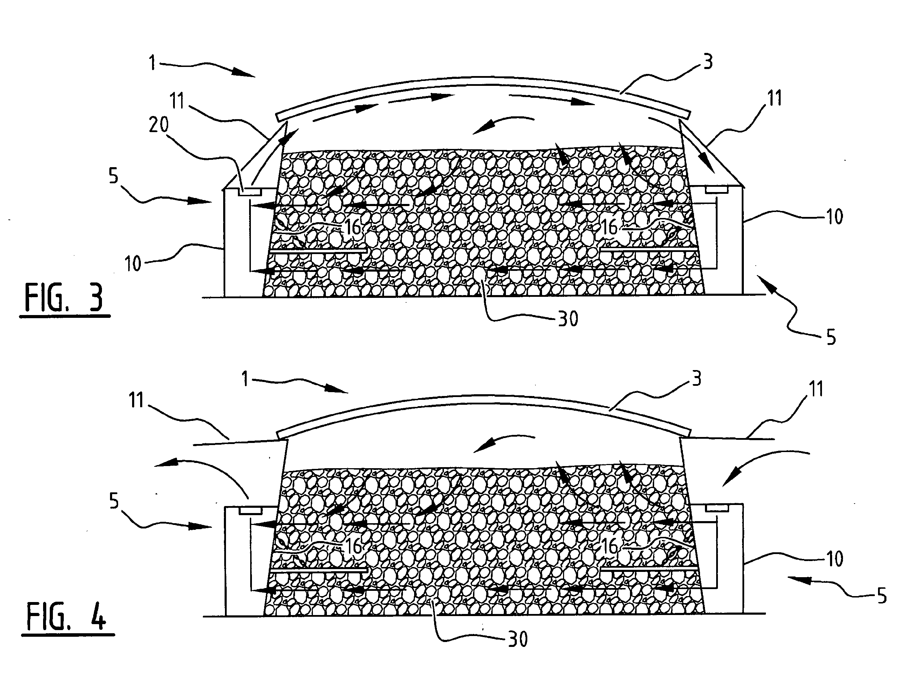

Figure 3 shows a first method of ventilation which can be implemented in the storage building according to the invention. By activating the fans in ventilation channel 20 an airflow from the right side wall to the left side wall is created here in that the fan in the right side wall initiates an airflow which is blown out through the right-hand wire mesh 16, while air is drawn in through the left-hand wire mesh 16 by the fan in the left side wall. Inside the right side wall the air is guided downward here from the upper open part 18 to the wire mesh 16. In the left side wall the air is guided upward from wire mesh 16 to the upper open part 18. The arrows show the airflow in the storage building. An airflow with a horizontal main direction is created here through the bulk of agricultural product 30. It is otherwise noted that the airflow can also rise upward to some extent, although this effect can be nullified if desired by covering the bulk on the top side with a plastic cover. Above the bulk agricultural product occurs an airflow in a direction opposite to the direction through the bulk agricultural product. A circulation flow is thus created in the storage building for the purpose of realizing sufficient drying of the agricultural product.

Figure 4 shows a second method of ventilation which can be implemented in the storage building according to the invention. The operation of the fans is the same as described for figure 3, but outer walls 11 have been opened, whereby they function as an opened valve so that the upper compartments of the side walls are brought into connection with the outside air. Outside air is drawn in on the right-hand side and then guided substantially horizontally through the bulk agricultural product in order to dry it. The air that has passed through is finally guided outside on the left-hand side.

## Claims

1. Storage building (1) for agricultural products, comprising two mutually opposite side walls, a front and rear wall and a roof (3), wherein each of the two side walls comprises a ventilation channel (20) in which a fan is arranged, wherein the ventilation channel (20) debouches into the internal space of the storage building such that the fans are able to generate an airflow in the internal space of the storage building, wherein the main direction of the airflow between the two side walls is horizontal
, **characterized in that** each of the two side walls is provided with a movable arm (22) which is connected hingedly to the side wall by means of a hinge.connection such that the arm is movable between a rest position against the side wall and an active position in which the arm stands away from the side wall and protrudes into the internal space of the storage building.

2. Storage building as claimed in claim 1, wherein the fans are two-way fans.

3. Storage building as claimed in any of the foregoing claims, wherein the ventilation channel (20) debouches into the lower part of the internal space.

4. Storage building as claimed in any of the foregoing claims, comprising at least two air connection channels to the outside air which are preferably provided with a controllable valve (11) for opening and closing the air connection channel.

5. Storage building as claimed in any of the foregoing claims, wherein an air connection channel to the outside air and a controllable valve (11) for opening and closing the air connection channel are arranged in each of the two mutually opposite side walls.

6. Storage building as claimed in any of the foregoing claims, wherein the side wall (3) comprises: an outer wall (10) and an inner wall (12), wherein the inner wall is provided with an air-permeable material (16) and wherein the ventilation channel debouches into the air-permeable material.

7. Storage building as claimed in any of the foregoing claims, wherein the walls and the roof (3) of the storage building are embodied as respective modules which are connected releasably to each other.

8. Storage building as claimed in claim 7, wherein the side wall modules (5) have a height of about 3.5 metres or less, and the side wall modules (3) can be extended in telescopic manner to a height of about 4.2 metres or more.

9. Storage building as claimed in any of the foregoing claims, wherein in active position the arm (22) is directed toward the opposite side wall.

10. Storage building as claimed in any of the foregoing claims, wherein a suspending connection (24) is also provided between the arm (22) and the side wall (3), wherein the suspending connection is fixedly connected to the arm at some distance distally of the hinge connection, and the suspending connection is fixedly connected to the side wall above the hinge connection.

11. Storage building as claimed in claim 10, wherein the suspending connection (24) is of a length such that in the active position the suspending connection is at maximum length and forms a linear connection.

12. Side wall module (5) for a storage building for agricultural products as claimed in any of the claims 1-11, wherein the side wall module comprises: an outer wall (10) and an inner wall (12) and a ventilation channel in which a fan is arranged, and wherein the inner wall (12) is provided with an air-permeable material (16) and wherein the ventilation channel debouches into the inner wall of the side wall module.

13. Use of a storage building (1) as claimed in any of the foregoing claims 1-11, wherein the storage building is filled with agricultural products (30) and wherein an airflow is generated in the internal space of the storage building with the fans such that the main direction of the airflow through the agricultural products in the storage building is horizontal.

## Patentansprüche

1. Lagerhaus (1) für Landwirtschaftsprodukte, das zwei sich gegenüberliegende Seitenwände, eine Vorder- und Rückwand und ein Dach (3) umfasst, wobei jede der zwei Seitenwände einen Lüftungskanal (20) umfasst, in dem ein Gebläse angeordnet ist, wobei der Lüftungskanal (20) seinen Weg in den Innenraum des Lagerhauses so nimmt, dass die Gebläse in der Lage sind, einen Luftstrom in dem Innenraum des Lagerhauses zu erzeugen, wobei die Hauptrichtung des Luftstroms zwischen den zwei Seitenwänden horizontal ist, **dadurch gekennzeichnet, dass** jede der zwei Seitenwände mit einem beweglichen Arm (22) bereitgestellt ist, der gelenkig mit der Seitenwand mittels einer Gelenkverbindung so verbunden ist, dass der Arm zwischen einer Ruheposition gegen die Seitenwand und einer aktiven Position, in der der Arm von der Seitenwand absteht und sich in den Innenraum des Lagerhauses erstreckt, beweglich ist.

2. Lagerhaus nach Anspruch 1, wobei die Gebläse Zwei-Wege-Gebläse sind.

3. Lagerhaus nach einem der vorangehenden Ansprüche, wobei der Lüftungskanal (20) seinen Weg in den unteren Teil des Innenraums nimmt.

4. Lagerhaus nach einem der vorangehenden Ansprüche, umfassend wenigstens zwei Luftverbindungskanäle zur Außenluft, welche bevorzugt bereitgestellt sind mit einem steuerbaren Ventil (11) zum Öffnen und Schließen des Luftverbindungskanals.

5. Lagerhaus nach einem der vorangehenden Ansprüche, wobei ein Luftverbindungskanal zur Außenluft und ein steuerbares Ventil (11) zum Öffnen und Schließen des Luftverbindungskanals in jeder der zwei sich gegenüberliegenden Seitenwände angeordnet sind.

6. Lagerhaus nach einem der vorangehenden Ansprüche, wobei die Seitenwand (3) umfasst: eine äußere Wand (10) und eine innere Wand (12), wobei die innere Wand mit einem luftpermeablen Material (16) bereitgestellt ist, und wobei der Lüftungskanal seinen Weg in das luftpermeable Material nimmt.

7. Lagerhaus nach einem der vorangehenden Ansprüche, wobei die Wände und das Dach (3) des Lagerhauses als entsprechende Module verkörpert sind, die lösbar miteinander verbunden sind.

8. Lagerhaus nach Anspruch 7, wobei die Seitenwandmodule (5) eine Höhe von etwa 3,5 m oder weniger aufweisen und die Seitenwandmodule (3) in teleskopartiger Weise auf eine Höhe von etwa 4,2 Metern oder mehr verlängert werden können.

9. Lagerhaus nach einem der vorangehenden Ansprüche, wobei in aktiver Position der Arm (22) in Richtung auf die gegenüberliegende Seitenwand gerichtet ist.

10. Lagerhaus nach einem der vorangehenden Ansprüche, wobei eine Aufhängeverbindung (24) ebenfalls zwischen dem Arm (22) und der Seitenwand (3) bereitgestellt ist, wobei die Aufhängeverbindung fest mit dem Arm in einigem Abstand distal der Gelenkverbindung verbunden ist, und wobei die Aufhängeverbindung fest mit der Seitenwand oberhalb der Gelenkverbindung verbunden ist.

11. Lagerhaus nach Anspruch 10, wobei die Aufhängeverbindung (24) von einer Länge ist, so dass in der aktiven Position die Aufhängeverbindung von maximaler Länge ist und eine lineare Verbindung ausbildet.

12. Seitenwandmodul (5) für ein Lagerhaus für Landwirtschaftsprodukte nach einem der Ansprüche 1 bis 11, wobei das Seitenwandmodul umfasst: eine äußere Wand (10) und eine innere Wand (12) und einen Lüftungskanal, in dem ein Gebläse angeordnet ist, und wobei die innere Wand (12) mit einem luftpermeablen Material (16) bereitgestellt ist, und wobei der Lüftungskanal einen Weg in die innere Wand des Seitenwandmoduls nimmt.

13. Verwendung eines Lagerhauses (1) nach einem der vorangehenden Ansprüche 1 bis 11, wobei das Lagerhaus mit Landwirtschaftsprodukten (30) gefüllt ist, und wobei ein Luftstrom in dem Innenraum des Lagerhauses mit den Gebläsen so erzeugt wird, dass die Hauptrichtung des Luftstroms durch die Landwirtschaftsprodukte in dem Lagerhaus horizontal ist.

## Revendications

1. Bâtiment de stockage (1) pour produits agricoles, comprenant deux parois latérales mutuellement opposées, une paroi avant et une arrière et un toit (3), dans lequel chacune des deux parois latérales comprend un conduit de ventilation (20) à l'intérieur duquel un ventilateur est agencé, dans lequel le conduit de ventilation (20) débouche dans un espace interne du bâtiment de stockage de manière à ce que les ventilateurs puissent générer un flux d'air dans l'espace interne du bâtiment de stockage, dans lequel la direction principale du flux d'air entre les deux parois latérales est horizontale,
**caractérisé en ce que** chacune des deux parois latérales comporte un bras mobile (22) qui est relié de manière articulée à la paroi latérale au moyen d'une liaison articulée, de telle sorte que le bras peut être déplacé entre une position de repos contre la paroi latérale et une position active dans laquelle le bras se dresse à l'écart de la paroi latérale et s'étend dans l'espace interne du bâtiment de stockage.

2. Bâtiment de stockage selon la revendication 1, dans lequel les ventilateurs sont des ventilateurs bidirectionnels.

3. Bâtiment de stockage selon l'une quelconque des revendications précédentes, dans lequel le conduit de ventilation (20) débouche dans la partie inférieure de l'espace interne.

4. Bâtiment de stockage selon l'une quelconque des revendications précédentes, comprenant au moins deux conduits de liaison d'air vers l'air extérieur qui sont, de préférence, équipés d'une vanne de commande (11) afin d'ouvrir et fermer le conduit de liaison d'air.

5. Bâtiment de stockage selon l'une quelconque des revendications précédentes, dans lequel un conduit de liaison d'air vers l'air extérieur et une vanne de commande (11) destinée à ouvrir et fermer le conduit de liaison d'air sont agencés sur chacune des deux parois latérales mutuellement opposées.

6. Bâtiment de stockage selon l'une quelconque des revendications précédentes, dans lequel la paroi latérale (3) comprend : une paroi externe (10) et une paroi interne (12), dans lequel la paroi interne est équipée d'un matériau perméable à l'air (16) et dans lequel le conduit de ventilation débouche dans le matériau perméable à l'air.

7. Bâtiment de stockage selon l'une quelconque des revendications précédentes, dans lequel les parois et le toit (3) du bâtiment de stockage sont mis en oeuvre sous la forme de modules respectifs qui sont reliés de manière amovible l'un à l'autre.

8. Bâtiment de stockage selon la revendication 7, dans lequel les modules de paroi latérale (5) présentent une hauteur inférieure ou égale à 3,5 mètres environ, et les modules de paroi latérale (3) peuvent être allongés d'une manière télescopique à une hauteur supérieure ou égale à 4,2 mètres environ.

9. Bâtiment de stockage selon l'une quelconque des revendications précédentes, dans lequel la position active du bras (22) est dirigée vers la paroi latérale opposée.

10. Bâtiment de stockage selon l'une quelconque des revendications précédentes, dans lequel une liaison par suspension (24) est aussi assurée entre le bras (22) et la paroi latérale (3), dans lequel la liaison par suspension est reliée fixement au bras à une certaine distance distale de la liaison articulée, et la liaison par suspension est reliée fixement à la paroi latérale au-dessus de la liaison articulée.

11. Bâtiment de stockage selon la revendication 10, dans lequel la liaison par suspension (24) présente une longueur telle que, dans la position active, la liaison par suspension présente une longueur maximum et forme une liaison linéaire.

12. Module formant paroi latérale (5) destiné à un bâtiment de stockage pour produits agricoles selon l'une quelconque des revendications 1 à 11, dans lequel le module formant paroi latérale comprend : une paroi externe (10) et une paroi interne (12) et un conduit de ventilation à l'intérieur duquel un ventilateur est agencé, et dans lequel la paroi interne (12) est équipée d'un matériau perméable à l'air (16) et dans lequel le conduit de ventilation débouche dans la paroi interne du module de paroi latérale.

13. Utilisation d'un bâtiment de stockage (1) selon l'une quelconque des revendications 1 à 11 précédentes, dans laquelle le bâtiment de stockage est rempli de produits agricoles (30) et dans laquelle un flux d'air est généré dans l'espace interne du bâtiment de stockage avec les ventilateurs de telle sorte que la direction principale du flux d'air à travers les produits agricoles dans le bâtiment de stockage est horizontale.
